# EUROPEAN PATENT APPLICATION

(11) **EP 4 212 979 A1**
(43) Date of publication of application: **19.07.2023**
(21) Application number: 22151975.4
(22) Date of filing: 18.01.2022
(51) Int. Cl.: G05B 23/02, G06N 20/00

(54) **COMPUTER-IMPLEMENTED METHOD AND DEVICE FOR MONITORING A PLANT**

(71) Applicant: BASF SE, 67056 Ludwigshafen am Rhein (DE)
(72) Inventor: Badinski, Alexander, 67056 Ludwigshafen am Rhein (DE); Ruehl, Phillip, 10785 Berlin (DE); Dierken, Martin, 01986 Schwarzheide (DE); Steinhaeuser, Sebastian, 01986 Schwarzheide (DE); Bonnowitz, Harro, 01986 Schwarzheide (DE)
(74) Representative: BASF IP Association

(57) **Abstract**

A method for monitoring a plant capable of:
receiving one or more educts; and
executing multiple processes in which the educts are processed, wherein each of the processes is characterized by an associated set of process parameters;
the method including:
comparing a set of process parameters of interest and the remaining sets of process parameters associated with the remaining multiple executed processes to determine a similarity degree between the set of process parameters of interest and the remaining sets of process parameters;
determining at least one similar process from the remaining multiple executed processes, the similar process having a similarity degree that is equal to or greater than a similarity threshold; and
outputting the set of process parameters of interest together with the set of process parameters associated with the determined at least one similar process.

## Description

The present invention relates to a computer-implemented method for monitoring a plant. The present invention further relates to a device for monitoring a plant. Further, a computer program product is provided.

In batch processing or batch plants, the production of multiple products occurs with the same set of equipment or processing units, for example a chemical or biological reactor. Monitoring the production processes is important to optimize the production processes, recognize abnormalities in the production processes and the like. However, due to the variability of products produced with the plant, it can be difficult to monitor the production process.

It is one object of the present invention to provide an improved monitoring of a plant.

According to a first aspect, a computer-implemented method for monitoring a plant is provided, the plant being capable of:
receiving one or more educts; and
executing multiple processes in which the educts are processed, wherein each of the multiple executed processes is characterized by an associated set of process parameters, wherein at least one of the process parameters evolves in time during execution of the executed process.

The method includes:
providing sets of process parameters associated with the multiple executed processes;
acquiring a set of process parameters of interest associated with a process of interest from the multiple executed processes;
comparing the set of process parameters of interest and the remaining sets of process parameters associated with the remaining multiple executed processes to determine a similarity degree between the set of process parameters of interest and the remaining sets of process parameters;
determining at least one similar process from the remaining multiple executed processes, the similar process having a similarity degree that is equal to or greater than a similarity threshold; and
outputting the set of process parameters of interest together with the set of process parameters associated with the determined at least one similar process.

The described method allows automatically determining similarities between process parameters of previously executed processes and a process of interest, which may be a currently executed process. Comparing such similar process parameters can be useful in detecting divergences in the process parameters of interest and accordingly performing an action such as adjusting the process parameter of interest, emitting a warning, searching for the reason of such a divergence or the like. Individual processes or batches can be monitored even in a plant in which multiple different products are produced. Through this improved monitoring, a quality of the produced products can be improved. The processes may further be optimized.

"Computer-implemented" here means that the method is entirely executable by a computer, computer system or the like. Such a computer system may be a personal computer (PC), an industrial PC, a processor or the like. The computer or computer system executing the above method may be part of the plant, for example of a control system of the plant, or may be connected to the plant.

The plant can be an industrial plant, in particular a chemical plant and/or a batch plant. The plant may be a chemical food, pharmaceutical and/or cosmetic plant. The plant may be used to manufacture or process chemicals using educts. An educt in particular designates a substance or compound used in manufacturing or processing chemicals with the plant. The plant may process the educts in multiple processes. The processes may designate different batches, i.e. a set of operations that the plant performs on the educts to manufacture a particular product or modify the educts. The plant may include multiple processing units for executing the processes.

All process parameters associated with one process may be designated as a "set" of process parameters. The process parameters may include information characterizing the corresponding process. Examples of process parameters include an identification (ID) of the process, such as a number, name, QR-code or the like, an information about the used educts, an information about the produced product, an information about which processing units are used, an information about the used settings of the processing units or the like. The used settings of the processing units may be preprogrammed settings required to produce the product according to the process. For example, the used settings may be physical parameters including a temperature, pressure, rotation speed or the like at which the educts are processed. The process parameters may be information about the process sensed using a sensor or the like.

The set of process parameters includes at least one process parameter which evolves in time. In particular, the process parameter evolving in time is a physical parameter such as the used setting for the processing units defined above.

The step of providing sets of process parameters may include retrieving, receiving and/or extracting the process parameters, for example from a database, from the plant and/or from a control system of the plant.

One of the processes may be a process of interest. The process of interest may be a process that is currently being executed by the plant. The process parameters associated with the process of interest may be designated as "process parameters of interest", which jointly form a set of process parameters of interest. The set of process parameters of interest is part of the provided sets of process parameters.

In the comparison step, the set of process parameters of interest is compared with the remaining sets of process parameters of the remaining multiple executed processes ("remaining processes" in the following). The remaining processes in particular designate the multiple executed processes without the process of interest. Accordingly, the "remaining process parameters" are the process parameters of the remaining processes.

As a result of the comparison, a similarity degree between the set of process parameters of interest on one hand and each remaining set of process parameters individually on the other hand, can be determined, in particular calculated. The similarity degree may be a numerical value proportional to the similarity. In particular, the higher the similarity degree, the higher the resemblance (similarity) between the compared sets of process parameters.

The process parameters of interest can have the same format and/or include information of the same type as the remaining process parameters. Preferably, the process parameters of interest include process parameters of certain types, comprising specific information, and the remaining process parameters include process parameters of the same types, comprising corresponding specific information. During the comparison, corresponding process parameters (i.e. process parameters of a same type) may be compared. A comparison score may be assigned to the compared corresponding process parameters. The similarity degree of the compared sets may be based on the comparison scores assigned to all process parameters comprised in the compared sets of process parameters. For example, the similarity degree may be a sum or product of the comparison scores of all the compared process parameters.

At least one executed process for which the determined similarity degree is at least the similarity threshold is designated as being a similar process. In particular, all executed processes for which the determined similarity degree is at least the similarity threshold are designated as being similar processes. The similarity threshold may be a predetermined and prestored value. The similarity threshold may be 70% similarity, 80% similarity, 90% similarity or the like.

Once the similar process is determined, its process parameters can be output together with the process parameters of interest. In particular, only some of the process parameters are output. "Outputting" here in particular means outputting on a display, displaying, providing the information to a control system of the plant, storing the information or the like. For example, the process parameters of the similar process and the process parameters of interest are visually output such that an operator can visually analyze any differences between the process parameters of interest and the process parameters of the similar process. Thereby, abnormalities in the process parameters of interest can be detected in a more convenient and reliable manner. The process parameters of interest can accordingly be optimized during the process. The process of interest can be monitored in a more reliable manner.

According to an embodiment, the step of outputting includes:
visually outputting an evolution in time of the at least one process parameter of interest evolving in time superimposed with and/or besides an evolution in time of a corresponding at least one process parameter evolving in time of the similar process.

The "step of outputting" designates the step of outputting the set of process parameters of interest together with the set of process parameters of the similar process. The visual representation of the time evolution of the process parameters may be a representation on a graph. In particular, in such a graph, one of the axes represents time and the other axis represents the physical parameter represented by the process parameter (such as temperature, pressure or the like).

"Superimposed" in particular means that the process parameters are represented on a same graph, with same axes, such as to allow a direct comparison of the represented process parameters. "Besides" in particular means that the process parameters are shown on a same display, next to each other. The "corresponding" process parameter in particular designates a process parameter of a same type, for example representing a same characteristic. For example, corresponding process parameters both represent a temperature evolution, both represent a pressure evolution or the like. Advantageously, a direct comparison of the represented process parameters is enabled, which allows monitoring the plant with reduced effort and time.

According to a further embodiment, the method further includes:
determining, for each process parameter of interest, a deviation value indicating a difference between the process parameter of interest and the corresponding process parameter of the similar process.

The deviation value may be calculated by subtracting the process parameter of interest at a given time from the corresponding process parameter of the similar process at the same time. In particular, the deviation value can be time-dependent and calculated for multiple or all times. The deviation value may be an indicator for any divergences of the process parameter of interest from an expected behavior. This may be indicative of an abnormality in the process of interest.

According to a further embodiment, the step of outputting includes:
visually indicating, for each process parameter of the similar process, the determined deviation value, in particular using a predefined color scheme.

For example, the deviation value can be represented by assigning three colors (such as green, orange, and red) to each process parameter of the similar process in accordance with the deviation value. In this example, green may indicate a small deviation value (for example, less than 5%), orange may indicate a medium deviation value (for example, between 5 and 20%) and red may indicate a high deviation value (for example, higher than 20%). Instead of using a discrete color scheme, it is possible to use a continuous color scale.

The above color scheme facilitates the monitoring of the process parameters because it can be seen at first glance whether there are any high deviations from expected process parameter values using the color scheme. If the process parameters are output as graphs, the graphs themselves may be of a color corresponding to the color scheme. Instead of the color scheme, labels with the values of the deviation value or the like may be output.

According to a further embodiment, the method further includes:
determining an abnormality in one of the process parameters of interest when the determined deviation value between this process parameter of interest and the corresponding process parameter of the similar process is equal to or greater than a predetermined abnormality threshold.

The predetermined abnormality threshold may be 15, 20, 30 or 40%, for example. The predetermined abnormality threshold can be stored in advance. An abnormality may be detected in an automatic manner. In particular, abnormalities may be detected early in the process in order to take appropriate actions. In further examples, it is possible to automatically determine an abnormality when multiple process parameters have predefined deviation values.

According to a further embodiment, the method further includes:
storing an optimal process parameter information indicating a range in which the process parameters of interest are expected;
determine whether each process parameter of interest is within the range included in the optimal process parameter information; and
if one process parameter of interest is outside the range included in the optimal process parameter information, determine an abnormality in said process parameter.

In particular, an abnormality in a process parameter is identified when said process parameter diverges from an optimal process parameter by more than a predefined amount indicated by the prestored range.

As part of the abnormality detection, some of the remaining sets of process parameters may have comments stored therewith or attached thereto, which indicate conclusions which were previously drawn with respect to this process. An operator can take these comments into account when monitoring the process of interest, in particular to draw identical or similar conclusions when a remaining process with such a comment is identified as a similar process.

For example, a heat exchanger (processing unit) fails during an exothermic reaction (process). This causes the temperature (process parameter) to rise abnormally. Afterwards, the temperature rise is investigated and it is found that the heat exchanger has failed. This temperature rise can now be stored with a message (comment) explaining that this rise was caused by the failed heat exchanger. Some time later, another batch (the process of interest) has an unusually high temperature rise. Among the similar processes determined, the operator finds the process with the comment and finds an explanation for the behavior in the comment and can immediately check whether the heat exchanger has failed again. In this way, everyday operations are improved and a repository for operational knowledge is provided.

According to a further embodiment, the method further includes:
when an abnormality is determined in one of the process parameters of interest, storing an abnormality information indicative of the abnormality in the process parameters of interest in the database, outputting a warning signal and/or modifying the process parameter of interest in which an abnormality is detected during execution of the process of interest.

Upon detection of an abnormality, a corresponding action may be taken, in particular to resolve the abnormality or improve the current and/or future processes. For example, the stored abnormality information can be used for determining and adjusting process parameters of future processes. The warning signal may be a light signal, a signal output on a display and/or a sound signal which allows an operator to react, for example to change the process parameters and/or to stop the process. Modifying the process parameters of interest during execution of the process of interest is advantageous because a stop of the process of interest can thereby be avoided while at the same time optimizing the process of interest.

According to a further embodiment, the step of comparing the set of process parameters of interest and the remaining sets of process parameters is performed using a trained artificial intelligence (Al) algorithm which receives, as in input, the sets of process parameters including the set of process parameters of interest and outputs the similarity degree.

The trained AI algorithm can be a machine learning algorithm. The training of the AI algorithm may be performed in advance using manually labelled training data comprising process parameter data of multiple processes. Using an AI algorithm allows performing a complex classification of whether a set of process parameters is similar to the set of process parameters of interest in an autonomous manner.

According to a further embodiment, the artificial intelligence algorithm is a classification algorithm configured to classify the remaining sets of process parameters in accordance with their similarity degree to the set of process parameters of interest.

According to a further embodiment, the process of interest is a process that is currently executed by the plant, wherein the step of outputting is continuously updated while the process of interest is being executed.

The process of interest being currently executed by the plant in particular means that the set of process parameters is incomplete (in time) at the time of acquiring the set of process parameters of interest, of determining similar processes and of outputting the process parameters. In particular, in the step of comparing the set of process parameters of interest with the remaining sets of process parameters, only the available part of the set of process parameters of interest can be used. In the step of outputting, the process parameters of interest may be shown up to a current or most recent time for which process parameters of interest are available. The output process parameters of interest may be updated as time passes. In particular, in the outputting step, the process parameters of the similar process may be output for the entire time of the process and the process parameters of interest may be added as time passes. This allows monitoring a process while it is being executed and accordingly adjusting and improving a current process.

Alternatively, the process of interest may also be a past process which has already been entirely executed by the plant. For example, the process of interest is the last process that was executed by the plant.

According to a further embodiment, the method further includes:
subdividing the process of interest into process of interest parts based on values of the process parameters of interest at different times and/or based on a gradient of the process parameters of interest at different times; and/or
subdividing the remaining multiple executed processes into remaining executed process parts based on values of the remaining process parameters at different times and/or based on a gradient of the remaining process parameters at different times.

The computer-implemented method may be used to autonomously divide the process of interest and the remaining processes in different parts depending on the values and evolution of the values (gradients) of the process parameters. This allows recognizing parts of the processes that are more or less important than other, prioritizing certain parts during the analysis or the like.

According to a further embodiment, the step of determining at least one similar process includes comparing process parameters from process parts of interest and process parameters from corresponding remaining executed process parts.

The step of determining at least one similar process can be facilitated because the comparison can be done by considering the process parts individually. Computational resources required for the comparison may thereby be reduced.

According to a further embodiment, the method further includes:
extracting the sets of process parameters from process parameter data received from the plant, including:
receiving, from the plant, the process parameters information indicating a time evolution of the process parameters used during execution of the multiple processes;
storing, in the database, a process start information characterizing a start of a process, a process end information characterizing an end of the process and optionally a process step information characterizing a specific step of the process;
comparing the process parameters from the received process parameter information with the process start information, the process stop information and optionally the process step information to identify the start, end and optionally specific step of the multiple processes in the received parameters information and to accordingly associate the process parameters included in the process parameters information with a process.

In particular, the computer-implemented method may autonomously identify the multiple processes based on the received process parameter data. The process parameter data may include the process parameters of the multiple processes but in a non-ordered, non-labelled and/or non-structured manner. For example, the process parameter data may not indicate when a process started, ended or the like.

By setting a process start information, a process end information and/or a process step information, the individual processes can be identified from the process parameter data by comparing the process start information, process end information and/or process step information with the process parameter data. Processes and their corresponding process parameters can be extracted in an autonomous manner, which reduces the effort required for preparing the sets of process parameters.

In addition to setting the conditions for the start, end and process step, it can be determined which tags are of interest for evaluations. This information can be bundled and stored in a database as a so-called job. Further, it can be determined what the product is called and whether there are event-based criteria, such as a tag that is described with a string specific to the product, when the product is currently being produced. At regular intervals, the backend may check whether new jobs are available. If so, the job can be requested and processed. The processing can work by first distinguishing whether the job has an event-based criterion. If so, the associated tag can be pulled via an Application Programming Interface (API) and the time intervals at which the event criterion is fulfilled are extracted. In the next step, the data of all tags of interest can be extracted (in the case of event-based jobs, only within the time intervals; in the case of other jobs, for the entire time period stored in the job). Within these time series, all points may then be searched to find the points for which all conditions for the start are fulfilled and all conditions for the end of a process are fulfilled. The processes can then be extracted. For this, the first start point may be taken and the next end point behind it. After the end point, the next start point can be searched for and the next end point can be searched for. This is repeated until all batches have been extracted. Finally, the intermediate steps within the processes can be searched for. To do this, the order in which the intermediate steps are defined is searched for when all conditions are fulfilled for the first time. This is then saved as the intermediate step. When a process has received all intermediate steps, it is stored in a database. This already represents data pre-processing for process simulation using black box models, as the cut data favors feature extraction from the relevant steps. The features obtained can be used to train the models, which is why the tool is also very well suited as preprocessing for complex tasks.

According to a further embodiment, the method further includes:
storing the set of process parameters associated with the process of interest in a database.

In particular, during or after execution of the process of interest, the set of process parameters associated with the process of interest are stored for future reference. For example, after the execution of the process of interest has terminated, the process of interest may become a "remaining process" when a new process of interest is executed by the plant.

According to a second aspect, a computer program product comprising instructions which, when the program is executed by a computer, cause the computer to carry out the method of the first aspect or of an embodiment of the first aspect, is provided.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the method of the first aspect or an embodiment thereof apply mutatis mutandis to the computer program product of the second aspect.

According to a third aspect, a monitoring device for monitoring a plant is provided. The plant is capable of:
receiving one or more educts; and
executing multiple processes in which the educts are processed, wherein each of the multiple executed processes is characterized by an associated set of process parameters, wherein at least one of the process parameters evolves in time during execution of the executed process.

The monitoring device is configured to perform the method step according to the first aspect or of an embodiment of the first aspect and in particular comprises:
a provision unit for providing sets of process parameters associated with the multiple executed processes;
an acquisition unit for acquiring a set of process parameters of interest associated with a process of interest from the multiple executed processes;
a comparison unit for comparing the set of process parameters of interest and the remaining sets of process parameters associated with the remaining multiple executed processes to determine a similarity degree between the set of process parameters of interest and the remaining sets of process parameters;
a determination unit for determining at least one similar process from the remaining multiple executed processes, the similar process having a similarity degree that is equal to or greater than a similarity threshold; and
an output unit for outputting the set of process parameters of interest together with the set of process parameters associated with the determined at least one similar process.

The embodiments and features described with reference to the method of the first aspect or an embodiment thereof apply mutatis mutandis to the monitoring device of the third aspect.

The units defined above can be implemented as hardware and/or software units.

According to a further aspect, a system including the above-defined plant and the monitoring device of the third aspect is provided.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an example of a plant;
- Fig. 2: shows a flow chart of a computer-implemented method for monitoring a plant according to a first embodiment;
- Fig. 3: shows a monitoring device for monitoring a plant;
- Fig. 4: shows an example of a display displaying process parameters;
- Fig. 5: shows a flow chart of a computer-implemented method for monitoring a plant according to a second embodiment; and
- Fig. 6: shows an example of a stored optimal process parameter curve.

In the Figures, like reference numerals designate like or functionally equivalent elements, unless otherwise indicated.

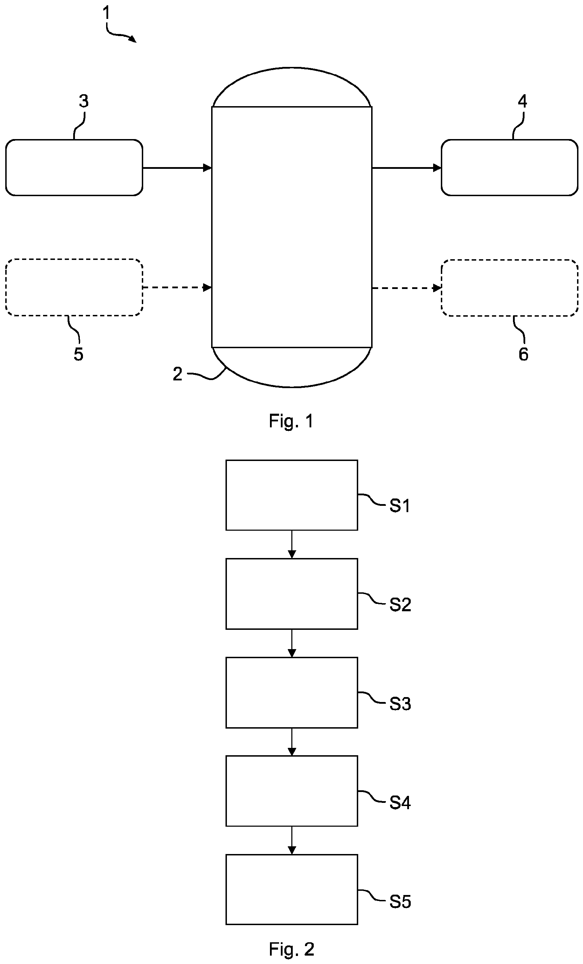

Fig. 1 shows a schematic diagram of an embodiment for a batch plant 1. The batch plant 1 comprises a processing unit 2 which is, for example a continuously stirred tank reactor. The tank reactor 2 can be used to process various educts 3, 5 under specific process parameters to produce a product 4, 6. Product 4, 6 can be, for example intermediate products of a pre-polymer synthesis, polyols, coatings, or other chemical, pharmaceutical, or biological compositions.

In the example of Fig. 1, a single input educt 3 is indicated which undergoes processing in the reactor 2 and results in a product 4. In the reactor 2, a chemical reaction process takes place that may be characterized by process parameters (described below), for example a process parameter can be a temperature profile or time series of an observable within the reactor 2. After the reaction process in reactor 2 is finished or stopped, the product 4 is obtained.

The batch processing unit 2 can be used for other products. For example, in dashed lines, an alternative educt 5 is depicted. The batch process then leads to an alternative product 6.

Each process performed by the reactor 2 is characterized by a set of process parameters. The set of process parameters can be written as: Sᵢ = {aᵢ, bᵢ, cᵢ, dᵢ}, wherein "S" designates the set, "a" designates a first process parameter which includes a list of the educts 3, 5 used for this process, "b" designates a second process parameter which includes a designation of the product 4, 6 achieved with this process, "c" designates a third process parameters, which indicates an evolution in time of the temperature inside the reactor 2, and "d" designates a fourth process parameter, which indicates a stirring rotation speed of the reactor 2. The index "i" is a natural number designating one particular process. For example, i=1 designates a first process, i=2 indicates a second process and so on. A process that the plant 1 currently executes is the j-th process, i.e. i=j. This j-th process is also designated as the "process of interest" in the following.

Monitoring the processes is important to optimize the processes, recognize abnormalities in the processes and the like.

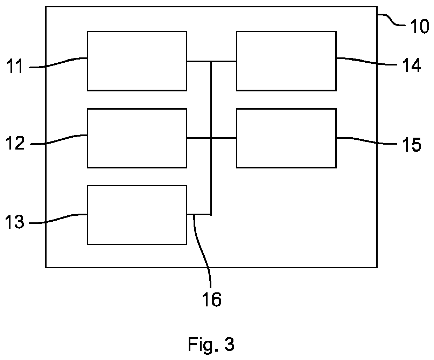

Fig. 2 shows a computer-implemented method for monitoring a plant 1. The method of Fig. 2 is implemented by a computer system connected to the plant 1. Alternatively, the computer system may be part of the plant 1, for example of a control system of the plant 1. The method of Fig. 2 may be implemented by the monitoring device 10 of Fig. 3, which may be part of such a computer system. The monitoring device 10 of Fig. 3 includes a provision unit 11, an acquisition unit 12, a comparison unit 13, a determination unit 14, an output unit 15 and a connection 16 for connecting the respective units in a communicative manner. In the following, Fig. 2 and 3 are described jointly.

In a step S1 of the method of Fig. 2, sets Sᵢ of process parameters associated with the multiple executed processes are provided. This step is performed by the provision unit 11 of the monitoring device 10 of Fig. 3. The provision unit 11 retrieves the sets Sᵢ from a database (not shown) in which the sets Sᵢ were stored after executing the multiple processes and/or directly from the plant 1.

In a step S2 of the method of Fig. 2, a set Sⱼ of process parameters of interest associated with a process of interest is acquired. The process of interest is the process that is currently being executed by the plant 1. In step S2, the set Sⱼ is acquired from the multiple sets Sᵢ provided in steps S1. The step S2 is performed by the acquisition unit 12 of the monitoring device of Fig. 3.

In a step S3 of the method of Fig. 2, the set Sⱼ of process parameters of interest is compared with the remaining sets Sᵢ of process parameters of the remaining processes. In detail, each remaining set Sᵢ is considered individually and compared to the set of interest Sⱼ. As such, sets Sⱼ and S₁ are compared, sets Sⱼ and S₂ are compared, sets Sⱼ and S₃ are compared, and so on.

Each comparison includes comparing corresponding process parameters. For the general example in which the set of interest Sⱼ is compared with the remaining set Sᵢ, the following items are compared:
(i) the lists of educts 3, 5 indicated in the sets Sᵢ and Sⱼ, namely aᵢ and aⱼ;
(ii) the produced product 4, 6 indicated in the sets Sᵢ and Sⱼ, namely bᵢ and bⱼ;
(iii) the temperature indicated in the sets Sᵢ and Sⱼ, namely cᵢ and cⱼ, in particular their evolution in time; and
(iv) the stirring rotation speed indicated in the sets Sᵢ and Sⱼ, namely dᵢ and dⱼ, in particular their evolution in time.

In the present example, since set Sⱼ relates to a process of interest that is currently being executed, only the process parameters that are available at the time of performing the comparison are compared.

In alternative embodiments, it is possible to base the comparison of the sets Sᵢ and Sⱼ on only one multiple of the above process parameters.

As a result of the above comparisons (i) - (iv), an overall similarity degree is determined which is indicative of how similar the sets Sᵢ and Sⱼ are. Some of the comparisons (i) - (iv) have a greater weight than others in determining the similarity degree. For example, if in comparison (i) it is determined that the educts 3, 5 are entirely different, the similarity degree is very low. Overall, a high similarity degree is determined when the comparisons (i) - (iv) all show similarities between the compared process parameters. The more similarities between the compared parameters, the higher the similarity degree. The step S3 is performed by the comparison unit 13 of the monitoring device 10 of Fig. 3.

In a step S4 of the method of Fig. 2, a similar process is determined using the determination unit 14 of the monitoring device 10 of Fig. 3. In detail, the similarity degrees determined at step S3 are considered and each process having a similarity degree that is greater than or equal to 75% (similarity threshold) is identified as a similar process to the current process. In the present example, two similar processes are determined, namely the a-th and b-th process, which are characterized by the set Sₐ and S_{b} of process parameters.

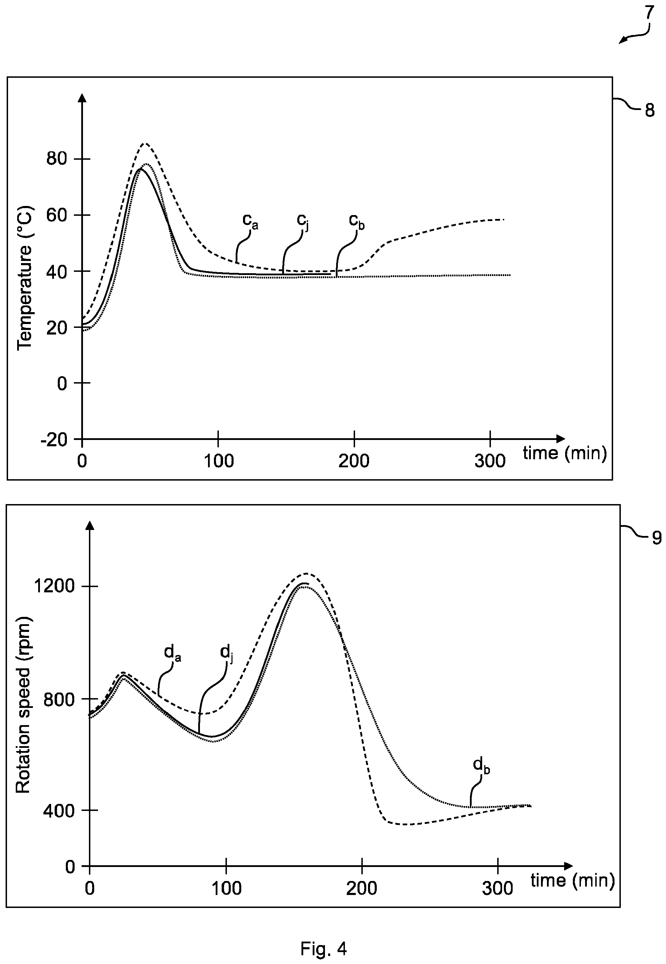

In a step S5 of the method of Fig. 2, the set of interest Sⱼ is output together with the similar sets Sₐ and S_{b} of the similar processes. The outputting of step S5 is performed using the output unit 15 of the monitoring device 10 of Fig. 3, which includes a display 7 (see Fig. 4).

Fig. 4 shows an example of a display 7 on which the process parameters of the sets Sⱼ, Sₐ and S_{b} are displayed. The display 7 includes an upper display part 8 and a lower display part 9, on each of which a graph is displayed.

On the upper display part 8, the output unit 15 displays a graph indicating an evolution in time (horizontal axis) of the third process parameter, which is temperature (vertical axis). The temperature of the process of interest is represented by a full line and labelled "cⱼ". Since the process of interest is currently performed by the plant 1 and not yet terminated, the temperature data is only available until a current time (around 180 minutes). The temperature graph further includes two curves of the temperature evolution of similar processes. These two curves are represented as dashed and dotted lines and labelled "cₐ" and "c_{b}".

On the lower display part 9, the output unit 15 displays a graph indicating an evolution in time (horizontal axis) of the fourth process parameter (vertical axis), which is the stirring rotation speed in revolutions per minute (rpm). The rotation speed of the process of interest is represented by a full line and labelled "dⱼ". Since the process of interest is currently performed by the plant 1 and not yet terminated, the rotation speed data is only available until a current time (around 180 minutes). The rotation speed graph further includes two curves of the rotation speed evolution of similar processes. These two curves are represented as dashed and dotted lines and labelled "dₐ" and "d_{b}".

The representation of Fig. 4 allows an operator to visually monitor the process of interest and to see any divergences from similar processes. Accordingly, abnormalities can be determined and corrected.

The operator may download the graphs of Fig. 4 in PDF-Format, which allows him to perform an offline analysis of the data. Alternatively, the data can be downloaded in CSV-Format, thereby allowing a further analysis of the data using additional tools.

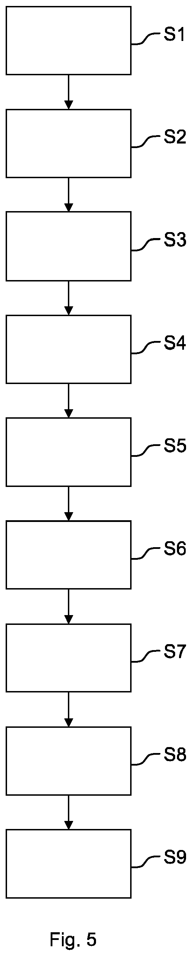

Fig. 5 shows a flow chart of a computer-implemented method for monitoring a plant 1 according to a second embodiment. The method of Fig. 5 may equally be performed by a computing system, for example using the monitoring device 10. The method of Fig. 5 equally comprises the steps S1 to S5 described in view of Fig. 2, which will not be described again. In addition, the method of Fig. 5 includes additional steps S6 to S9.

In the step S6 of the method of Fig. 5, a deviation value indicating a difference between the process parameter of interest and the corresponding process parameter of the similar process is determined (calculated). In detail, in the above-described example, a difference between the temperature of interest cⱼ and the temperature cₐ of the first similar process, as well as a difference between the temperature of interest cⱼ and the temperature c_{b} of the second similar process are calculated to obtain two deviation values for the temperature. Similarly, a difference between the rotation speed of interest dⱼ and the rotation speed dₐ of the first similar process, as well as a difference between the rotation speed of interest dⱼ and the rotation speed d_{b} of the second similar process are calculated to obtain two deviation values for the rotation speed.

In the step S7, the determined deviation value is visually indicated. This is performed by providing the curves representing the process parameters of the similar processes (namely cₐ, c_{b}, dₐ and d_{b}) in a color that is indicative of a divergence with the process parameter of interest cⱼ and dⱼ. In the example of Fig. 4, the process parameters c_{b} and d_{b} are represented in green (corresponding to the dotted line in Fig. 4) because they are very similar to the process parameters of interest cⱼ and dⱼ (the deviation value is below 5% at any time). In the example of Fig. 4, the process parameters cₐ and dₐ are represented in orange (corresponding to the dashed line in Fig. 4) because they show some divergences to the process parameters of interest cⱼ and dⱼ (the deviation value is above 5% at some times but below 20% at all times). A deviation value above 20% at any time would be indicated in red.

In the step S8 of the method of Fig. 5, an abnormality in one of the process parameters is determined when its deviation value is larger than or equal to a predetermined abnormality threshold. The predetermined abnormality threshold is here 20%. In the example of Fig. 4, none of the calculated deviation values is above 20% so that no abnormality is determined.

However, in case of detecting an abnormality, a warning signal is output on the screen and the operator can accordingly search for the problem and, if necessary, modify one of the process parameters of interest during execution of the process of interest (step S9 in the method of Fig. 5). Accordingly, an improved monitoring is enabled.

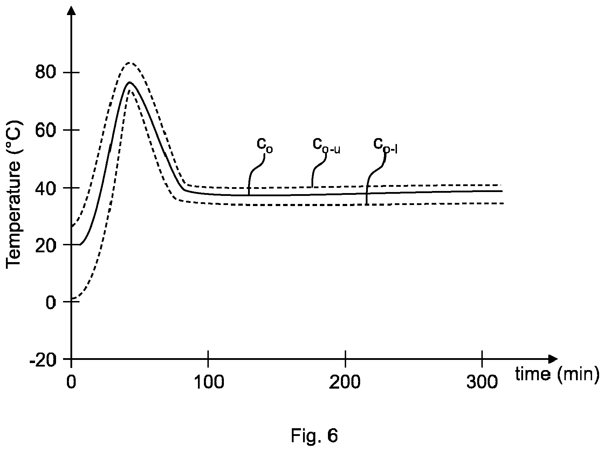

The computer-implemented methods of Fig. 2 and 5 can be modified to include further functionalities. For example, the method may further include storing an optimal process parameter curve. Such an optimal process parameter curve is for example shown in Fig. 6. The optimal process parameter curve indicates an optimal, desired evolution of the third process parameter (temperature) over time as a full line cₒ. Upper and lower bounds of the curve are indicated by dashed lines and labelled c_{o_u} and c_{o_l}, respectively. The method allows comparing the optimal process parameter value with the process parameter (temperature) of interest and if the process parameter (temperature) of interest lies outside of the bound of Fig. 6, emit a warning.

Further functionalities of the method may include subdividing the processes into process parts based on values of the process parameters and on gradients thereof. In the example of Fig. 4, the processes may be divided into the following parts:
- a first part from time t=0 to time t=100 minutes, in which the temperature gradient is high and the rotation speed gradient is low;
- a second part from time t=100 minutes to time t=200 minutes, in which the temperature gradient is low and the rotation speed gradient is high; and
- a third part from time t=200 minutes to time t=350 minutes, in which the temperature gradient is low and the rotation speed gradient is low.

After subdividing the processes in accordance with the above and accordingly obtaining process of interest parts and corresponding remaining executed process parts, the monitoring of the process of interest can be facilitated because only individual parts of the remaining processes need to be compared with the process of interest parts for the purposes of determining the similarity degree, the deviation value and/or the abnormality.

Although the present invention has been described in accordance with preferred embodiments, it is obvious for the person skilled in the art that modifications are possible in all embodiments. Instead or in addition to the reactor 2, the plant 1 may include other processing units such as a heat exchanger, for example. Further, the process parameters may include other parameters such as a pressure, applied magnetic field or the like. The values provided for the abnormality threshold and similarity threshold are mere examples and can be chosen differently depending on the application. The way of representing the process parameters may vary from the example of Fig. 4, and the process parameter curves of a same type may, for example, be represented on different curved next to each other. Instead of two similar processes, only one or more than two similar processes can be identified and output.

### REFERENCE NUMERALS

- 1: plant
- 2: reactor
- 3, 5: educt
- 4, 6: product
- 7: display
- 8: upper display part
- 9: lower display part
- 10: monitoring device
- 11: provision unit
- 12: acquisition unit
- 13: comparison unit
- 14: determination unit
- 15: output unit
- 16: connection
- aᵢ- dᵢ: process parameters
- Sᵢ: set of process parameters
- S1 - S9: method steps

## Claims

1. A computer-implemented method for monitoring a plant (1), the plant (1) being capable of:
receiving one or more educts (3, 5); and
executing multiple processes in which the educts (3, 5) are processed, wherein each of the multiple executed processes is **characterized by** an associated set (Sᵢ) of process parameters (aᵢ - dᵢ), wherein at least one of the process parameters (aᵢ - dᵢ) evolves in time during execution of the executed process;
wherein the method includes:
providing (S1) sets (Sᵢ) of process parameters (aᵢ - dᵢ) associated with the multiple executed processes;
acquiring (S2) a set (Sⱼ) of process parameters of interest (aⱼ - dⱼ) associated with a process of interest from the multiple executed processes;
comparing (S3) the set (Sⱼ) of process parameters of interest (aⱼ - dⱼ) and the remaining sets (Sᵢ) of process parameters (aᵢ - dᵢ) associated with the remaining multiple executed processes to determine a similarity degree between the set (Sⱼ) of process parameters of interest (aⱼ - dⱼ) and the remaining sets (Sᵢ) of process parameters (aᵢ - dᵢ);
determining (S4) at least one similar process from the remaining multiple executed processes, the similar process having a similarity degree that is equal to or greater than a similarity threshold; and
outputting (S5) the set (Sⱼ) of process parameters of interest (aⱼ - dⱼ) together with the set (Sᵢ) of process parameters (aᵢ - dᵢ) associated with the determined at least one similar process.

2. The method according to claim 1, wherein the step of outputting includes:
visually outputting an evolution in time of the at least one process parameter of interest evolving in time superimposed with and/or besides an evolution in time of a corresponding at least one process parameter evolving in time of the similar process.

3. The method according to claim 1 or 2, further including:
determining (S6), for each process parameter of interest, a deviation value indicating a difference between the process parameter of interest and the corresponding process parameter of the similar process.

4. The method according to claim 3, wherein the step of outputting includes:
visually indicating (S7), for each process parameter of the similar process, the determined deviation value, in particular using a predefined color scheme.

5. The method according to claim 3 or 4, further including:
determining (S8) an abnormality in one of the process parameters of interest (aⱼ - dⱼ) when the determined deviation value between this process parameter of interest (aⱼ - dⱼ) and the corresponding process parameter (aᵢ - dᵢ) of the similar process is equal to or greater than a predetermined abnormality threshold.

6. The method according to one of claims 1 to 5, further including:
storing an optimal process parameter information indicating a range in which the process parameters of interest (aⱼ - dⱼ) are expected;
determine whether each process parameter of interest (aⱼ - dⱼ) is within the range included in the optimal process parameter information; and
if one process parameter of interest (aⱼ - dⱼ) is outside the range included in the optimal process parameter information, determine an abnormality in said process parameter (aⱼ - dⱼ).

7. The method according to claim 5 or 6, further including:
when an abnormality is determined in one of the process parameters of interest (aⱼ - dⱼ), storing an abnormality information indicative of the abnormality in the process parameters of interest (aⱼ - dⱼ) in the database, outputting (S9) a warning signal and/or modifying (S9) the process parameter of interest in which an abnormality is detected during execution of the process of interest.

8. The method according to one of claims 1 to 7, wherein the step of comparing the set (Sⱼ) of process parameters of interest (aⱼ - dⱼ) and the remaining sets (Sᵢ) of process parameters (aᵢ - dᵢ) is performed using a trained artificial intelligence algorithm which receives, as in input, the sets (Sᵢ) of process parameters (aᵢ - dᵢ) including the set (Sⱼ) of process parameters of interest (aⱼ - dⱼ) and outputs the similarity degree.

9. The method according to claim 8, wherein the artificial intelligence algorithm is a classification algorithm configured to classify the remaining sets (Sᵢ) of process parameters (aᵢ - dᵢ) in accordance with their similarity degree to the set (Sⱼ) of process parameters of interest (aⱼ -dⱼ).

10. The method according to one of claims 1 to 9, wherein the process of interest is a process that is currently executed by the plant (1), wherein the step of outputting is continuously updated while the process of interest is being executed.

11. The method according to one of claims 1 to 10, further including:
subdividing the process of interest into process of interest parts based on values of the process parameters of interest (aⱼ - dⱼ) at different times and/or based on a gradient of the process parameters of interest (aⱼ - dⱼ) at different times; and/or
subdividing the remaining multiple executed processes into remaining executed process parts based on values of the remaining process parameters (aᵢ - dᵢ) at different times and/or based on a gradient of the remaining process parameters (aᵢ - dᵢ) at different times.

12. The method according to claim 11, wherein the step of determining at least one similar process includes comparing process parameters from process parts of interest and process parameters (aᵢ - dᵢ) from corresponding remaining executed process parts.

13. The method according to one of claims 1 to 12, further including:
extracting the sets (Sᵢ) of process parameters (aᵢ - dᵢ) from process parameter data received from the plant (1), including:
receiving, from the plant (1), the process parameters information indicating a time evolution of the process parameters (aᵢ - dᵢ) used during execution of the multiple processes;
storing, in the database, a process start information characterizing a start of a process, a process end information characterizing an end of the process and optionally a process step information characterizing a specific step of the process;
comparing the process parameters (aᵢ - dᵢ) from the received process parameter information with the process start information, the process stop information and optionally the process step information to identify the start, end and optionally specific step of the multiple processes in the received parameters information and to accordingly associate the process parameters (aᵢ - dᵢ) included in the process parameters information with a process.

14. A computer program product comprising instructions which, when the program is executed by a computer, cause the computer to carry out the method of one of claims 1 to 13.

15. A monitoring device (10) for monitoring a plant (1), the plant (1) being capable of:
receiving one or more educts (3, 5); and
executing multiple processes in which the educts (3, 5) are processed, wherein each of the multiple executed processes is **characterized by** an associated set (Sᵢ) of process parameters (aᵢ - dᵢ), wherein at least one of the process parameters (aᵢ - dᵢ) evolves in time during execution of the executed process;
wherein the monitoring device (10) is configured to perform the method step according to any one of claims 1 to 13 and in particular comprises:
a provision unit (11) for providing sets (Sᵢ) of process parameters (aᵢ - dᵢ) associated with the multiple executed processes;
an acquisition unit (12) for acquiring a set (Sⱼ) of process parameters of interest (aⱼ - dⱼ) associated with a process of interest from the multiple executed processes;
a comparison unit (13) for comparing the set (Sⱼ) of process parameters of interest (aⱼ - dⱼ) and the remaining sets (Sᵢ) of process parameters (aᵢ - dᵢ) associated with the remaining multiple executed processes to determine a similarity degree between the set (Sⱼ) of process parameters of interest (aⱼ - dⱼ) and the remaining sets (Sᵢ) of process parameters (aᵢ - dᵢ);
a determination unit (14) for determining at least one similar process from the remaining multiple executed processes, the similar process having a similarity degree that is equal to or greater than a similarity threshold; and
an output unit (15) for outputting the set (Sⱼ) of process parameters of interest (aⱼ - dⱼ) together with the set (Sᵢ) of process parameters (aᵢ - dᵢ) associated with the determined at least one similar process.
